Europäisches Patentamt

European Patent Office

Office européen des brevets

(11) Veröffentlichungsnummer: **0 418 748 A1**

## (12) EUROPÄISCHE PATENTANMELDUNG

(21) Anmeldenummer: **90117736.0**

(22) Anmeldetag: **14.09.90**

(51) Int. Cl.⁵: **B62B 3/10**

(30) Priorität: **18.09.89 DE 8911126 U**
**18.09.89 DE 8911127 U**

(43) Veröffentlichungstag der Anmeldung:
**27.03.91 Patentblatt 91/13**

(84) Benannte Vertragsstaaten:
**DE FR GB**

(71) Anmelder: **Wanzl GmbH & Co.**
**Entwicklungs-KG**
**Postfach 11 29**
**W-8874 Leipheim(DE)**

(72) Erfinder: **Pech, Raimund**
**Weissenhornerstrasse 9**
**W-8870 Günzburg(DE)**
Erfinder: **Wanzl, Rudolf**
**Sonnenweg 8**
**W-8874 Leipheim(DE)**

(54) **Einkaufswagen.**

(57) Die vorderen Fahrrollen (16) und der Bodenrost (41) eines Einkaufswagens (1) sind an Befestigungsteilen (24) befestigt, die in Haltern (20) eingesetzt sind, welche sich an den Innenlängsseiten (10) des aus rohrförmigem Material bestehenden Fahrgestelles (2) befinden. Gemäß einer Erweiterung der Erfindung können die Befestigungsteile (24) Bestandteil eines nicht näher dargestellten Abdeckteiles sein, welches den vorderen Bereich (11) des Fahrgestelles (2) überdeckt und die Funktion eines Stoßfängers wahrnimmt. Ist der rohrförmige Grundrahmen (9) des Fahrgestelles (2) mit seinem hinteren offenen Ende (8) nach oben gekrümmt, so daß zwei Träger gebildet sind, welche den Korb (17) tragen, so können im Bereich einer jeden Trägerkrümmung (5) je ein weiterer Halter (20) vorgesehen sein, die zur Aufnahme von Befestigungsteilen (24´) vorgesehen und zum Befestigen der hinteren Fahrrollen (16) bestimmt sind.

## EINKAUFSWAGEN

Die Erfindung betrifft einen Einkaufswagen mit einem sich in Schieberichtung verjüngenden Fahrgestell, das einen Korb trägt, der mit einer in das Korbintiere verschwenkbaren Rückwand ausgestattet ist und das Fahrgestell und der Korb so gestaltet sind, daß sich gleiche Einkaufswagen platzsparend ineinanderschieben lassen, wobei das Fahrgestell einen die Fahrrollen tragenden, aus rohrförmigem Material gebildeten Grundrahmen aufweist, an dessen hinterem offenen Ende zwei den Korb tragende Träger angeordnet sind, wobei die Träger wahlweise auch durch Krümmung des hinteren Endes des Grundrahmens nach oben gebildet sein können und wobei im vorderen Bereich des Fahrgestelles über den vorderen Rollen je ein Befestigungsteil am Fahrgestell angeordnet und jedes Befestigungsteil zur schwenkbaren Aufnahme eines auf dem Fahrgestell aufliegenden Bodenrostes und zur Befestigung einer vorderen Fahrrolle ausgebildet ist.

Durch das deutsche Gebrauchsmuster DE-81 05 605.2 ist ein Einkaufswagen beschrieben, bei dem die Befestigung der vorderen Fahrrollen und des Bodenrostes am Fahrgestell gemeinsam erfolgt. Um dies zu ermöglichen, sind in je einer Vorderecke des Fahrgestelles je ein Winkelschenkel eingeschweißt. An jedem Ninkelschenkel ist wiederum ein Befestigungsorgan angeschweißt. Die beiden so gestalteten Bauteile eignen sich sowohl zum Befestigen der Rollen, als auch zur schwenkbaren Lagerung des Bodenrostes. Die erforderlichen Schweißarbeitsgänge können als fertigungstechnisch aufwendig betrachtet werden.

Durch die US-Patentschriften 3 829 114, 3 931 984 und 4 487 137 sind Einkaufswagen bekannt, die in ihrem rückwärtigen Bereich und ausgehend vom Grundrahmen des Fahrgestelles beidseitig nach oben gebogene Träger aufweisen, die den Korb tragen, wobei zumindest die hinteren Fahrrollen am waagrechten Bereich der Längsholme des Fahrgestelles angeschraubt sind. Diese relativ einfache Befestigungsart bringt jedoch den Nachteil mit sich, daß derart gestaltete Einkaufswagen dann sehr leicht zum Kippen nach rückwärts neigen, wenn man sie mit einer hinteren Ablage zur Aufnahme von Getränkekisten ausstattet, um volle Getränkekisten auf der Ablage abzustellen, wie dies in der europäischen Patentschrift 0 141 398 beschrieben ist.

Die Aufgabe der Erfindung besteht darin, bei einem Einkaufswagen der gattungsgemäßen Art eine neue zweckmäßige und fertigungstechnisch einfache Befestigungsmöglichkeit für die vorderen Fahrrollen zu schaffen. Sollten bei einem gattungsgemäßen Einkaufswagen die Träger durch Krümmung des Grundrahmens nach oben gebildet sein, so besteht noch ergänzend die Aufgabe der Erfindung darin, auf einfache Weise eine Verlängerung des Radstandes nach hinten zu ermöglichen.

Die Aufgabe wird durch die kennzeichnenden Merkmale des Anspruches 1 gelöst.

Ein erster besonderer Vorteil der Erfindung besteht darin, daß im Gegensatz zu der im vorab genannten Gebrauchsmuster ersichtlichen Notwendigkeit, an jedem Winkelstück ein Befestigungsorgan anzuschweißen, an welche je eine Fahrrolle angeschraubt wird, nun an jedem erfindungsgemäßen Befestigungsteil ein Gegenhalter lose und formschlüssig einfügbar ist, der zum Befestigen je einer Fahrrolle und des Bodenrostes am Fahrgestell dient, so daß das aufwendige Anschweissen je eines Befestigungsorganes entfällt.

Ein zweiter Vorteil ist darin erkennbar, daß die hinteren Fahrrollen mit ihrem ebenen Gabel- oder Gehäuserücken nicht mehr an den waagrechten Längsholmen, sondern durch die Verwendung von Haltern und Befestigungsteilen so weit als möglich am hintersten Ende des Fahrgestelles, also im Bereich der Trägerkrümmungen befestigbar sind, so daß dadurch auf einfache Weise eine Verlängerung des Radstandes und somit eine Verringerung der Kippgefahr des Einkaufswagens erzielt wird. Gestaltet man zweckmäßigerweise die unterste Anlagefläche der Halter waagrecht, so können auch als Lenkrollen gestaltete Fahrrollen vorgesehen werden, welche die Manövrierfähigkeit des Einkaufswagens wesentlich erhöhen.

Bei einem weiteren bevorzugten Ausführungsbeispiel finden die für die vorderen Fahrrollen bestimmten Befestigungsteile Aufnahme in je einem an den Innenlängsseiten des Fahrgesteiles angeschweißten, beispielsweise V-förmigen Halter. Bei der Montage werden die Gegenhalter in die Befestigungsteile eingefügt und letztere anschließend auf zwei voneinander wegragende, auf gleicher waagrechter Achse angeordnete Drahtenden des Bodenrostes aufgesteckt. Anschließend wird die so gebildete Baueinheit mit den Befestigungsteilen voraus in die V-förmigen Halter von oben her eingesetzt. Durch Verschrauben der Rollen von unten her mit den Gegenhaltern wird jedes Befestigungsteil mit den V-förmigen Halverspannt. Dies bedeutet, daß durch das Anschrauben der Fahrrollen am Fahrgestell gleichzeitig das Befestigen der Befestigungsteile und des Bodenrostes am Fahrgestell bewirkt wird.

Entsprechend einem weiteren Ausführungsbeispiel sind die ursprünglich lose verwendeten Befestigungsteile in ein Abdeckteil integriert, das die Stirnseite des Fahrgesteiles überdeckend, die Rolle einer Stoßleiste übernimmt, wobei das Befestigen der Fahrrollen, des Bodenrostes und der Befestigungsteile und damit letztendlich auch das Befestigen des Abdeckteiles in der gleichen Weise erfolgt, wie vorab beschrieben. Eine separate Befestigung eines Stoßfängers an der Stirnseite des Fahrgestelles entfällt, da der Stoßfänger Bestandteil des Abdeckteiles ist.

Bei allen diesen Ausführungsbeispielen ist in jedem Befestigungsteil ein Gegenhalter lose eingefügt, in welchen die Befestigungsschraube für eine vordere und/oder hintere Fahrrolle einschraubbar ist.

Unabhängig davon sind noch weitere Lösungen möglich, die z.B. eine Befestigung der hinteren Fahrrollen am Grundrahmen des Fahrgestelles ermöglichen.

So weist bei einem Ausführungsbeispiel das Befestigungsteil anstelle eines Gegenhalters eine senkrecht angeordnete Gewindebohrung zur Aufnahme der Befestigungsschraube für eine hintere Fahrrolle auf.

Schließlich erlaubt ein weiteres Ausführungsbeispiel eine Lösung bei welcher der Halter und das Befestigungsteil zu einem Bauteil vereinigt sind, das ebenfalls mit einer senkrechten Gewindebohrung zur Aufnahme der vorab erwähnten Befestigungsschraube ausgestattet ist.

Die Erfindung wird anhand von Ausführungsbeispielen näher erläutert. Es zeigt

Fig. 1 einen Einkaufswagen mit Befestigungsteilen und Bodenrost;

Fig. 2 ein Detail des vorderen Bereiches eines Fahrgestelles;

Fig. 3 in einer räumlichen Unteransicht ein Befestigungsteil mit einem Gegenhalter, dessen Einschubrichtung in das Befestigungsteil durch einen Pfeil angezeigt ist;

Fig. 4 im Detail in einer Draufsicht den vorderen rechten Eckbereich des Fahrgestelles mit montiertem Bodenrost;

Fig. 5 in einer Draufsicht ein montiertes Abdeckteil sowie

Fig. 6 das Abdeckteil in einer Seitenansicht im Schnitt;

Fig. 7 einen weiteren erfindungsgemäßen Einkaufswagen;

Fig. 8 eine Trägerkrümmung mit einem Halter;

Fig. 9 bis 11 verschiedene Ausführungsbeispiele zur Befestigung einer Fahrrolle sowie

Fig.12 einen Halter und ein Befestigungsteil, die zu einem einzigen Bauteil vereinigt sind.

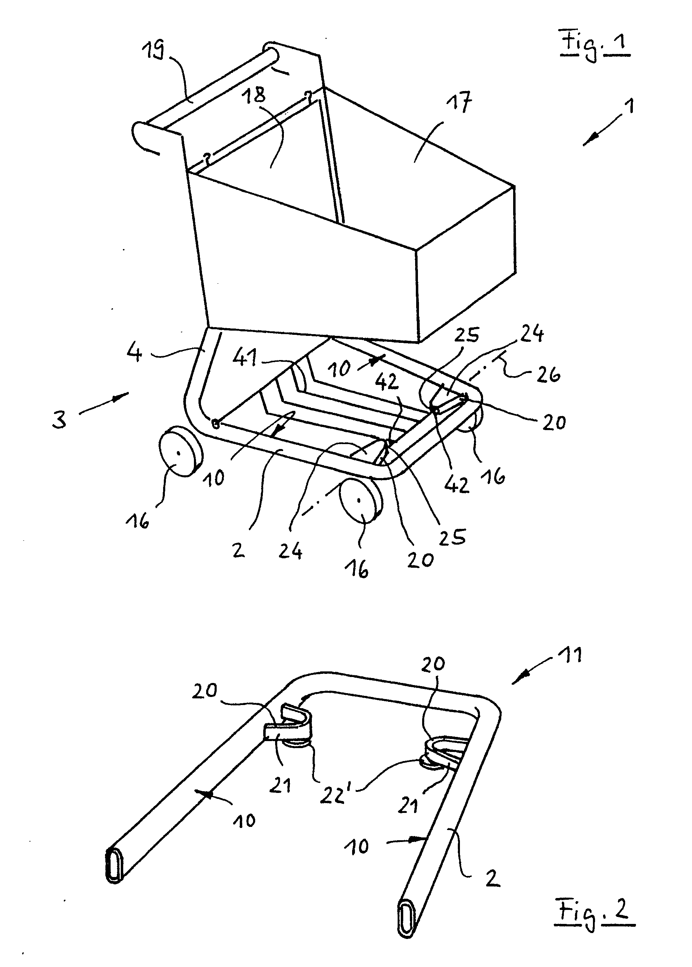

Der in Fig. 1 dargestellte Einkaufswagen 1 weist in üblicher Weise ein trapezförmiges Fahrgestell 2 auf, dessen längere parallele Seite fehlt. Am rückwärtigen Ende 3 des Fahrgestelles 2 streben Träger 4 nach oben, die einen Behälter in Form eines Korbes 17 tragen. Sowohl das Fahrgestell 2, als auch der Korb 17 verjüngen sich in Schieberichtung des Einkaufswagens 1, wobei die Rückwand 18 des Korbes 17 in bekannter Weise durch eine Klappe gebildet ist, die sich zum Zwecke des Ineinanderschiebens zweier Einkaufswagen 1 in das Korbinnere verschwenken läßt. Am oberen rückwärtigen Ende des Korbes 17 befindet sich eine Schiebeeinrichtung 19 in Form eines Handgriffes. Das Fahrgestell 2 weist vier Fahrrollen 16 auf. Die beiden vorderen Fahrrollen 16 sind an Befestigungsteilen 24 befestigt, die in an den Innenlängsseiten 10 des aus rohrförmigen Material gebildeten Fahrgestelles 2 befinden, im Beispiel V-förmigen Haltern 20 eingefügt sind. In jedem Befestigungsteil 24 befindet sich eine horizontal angeordnete Öffnung 25, wobei sich die Öffnungen 25 der beiden Befestigungsteile 24 auf einer gemeinsamen, quer zur Schieberichtung angeordneten waagrechten Achse 26 befinden und zwei entsprechend angeordnete Drahtenden 42 eines Bodenrostes 41, der auf dem Fahrgestell 2 aufliegt, in die Öffnungen 25 verschwenkbar eingesetzt sind. Der Bodenrost 41 läßt sich somit eine begrenzte Wegstrecke um die waagrechte Achse 26 nach oben schwenken. Diese Verschwenkbarkeit ist erforderlich, um mehrere Einkaufswagen 1 platzsparend ineinanderschieben zu können.

In einer räumlichen Darstellung zeigt Fig. 2 den vorderen Bereich 11 des Fahrgestelles 2. Man erkennt in der Zeichnung die bereits erwehnten, an den Innenlängsseiten 10 des

Fahrgestelles 2 befindlichen V-förmigen Kalter 20, die mit ihren Schenkelenden 21 am Fahrgestell 2 angeschweißt sind. An der Unterseite der Kalter 20 ist je eine ebene, mit einem Druchbruch ausgestattete Platte 22′ angeschweißt. Die Platten 22′ dienen als Anlage für die an das Fahrgestell 2 anzuschraubenden vorderen Fahrrollen 16, wobei durch die Durchbrüche der Platten 22′ die Befestigungsschrauben 37 für die Fahrrollen 16 hindurchgesteckt werden.

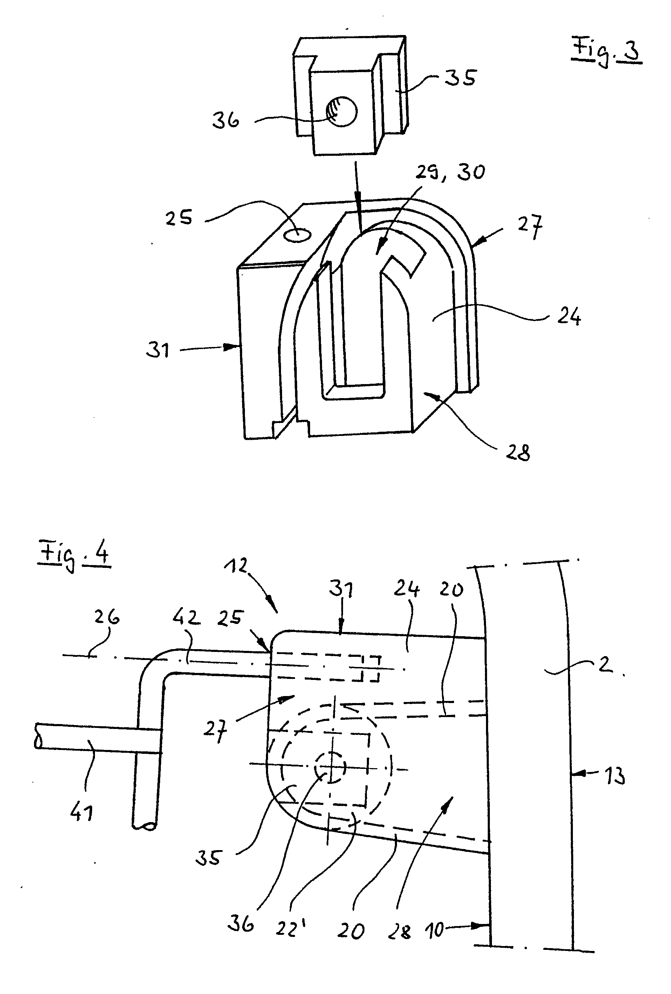

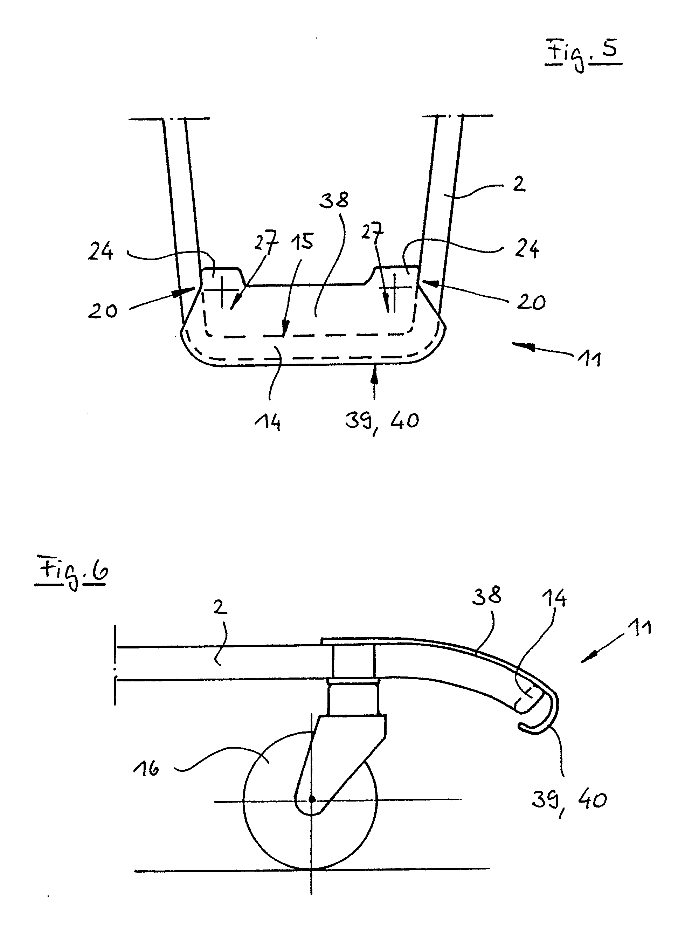

Fig. 3 zeigt ebenfalls räumlich dargestellt ein Befestigungsteil 24 und einen Gegenhalter 35. Das bevorzugt aus Kunststoff gefertigte Befestigungsteil 24 weist eine Deckplatte 27 auf, die im montierten Zustand des Befestigungsteiles 24 den dafür vorgesehenen Kalter 20 weitestgehend abdeckt. Die Kontur des unterhalb der Deckplatte 27 befindlichen Formabschnittes 28 ist der Innenkontur des Kalters angepaßt. Natürlich kann anstelle eines von oben betrachtet V-förmigen Kalters 20 auch ein andersartig geformter Kalter 20 vorgesehen sein. Dementsprechend wäre dann auch der Formabschnitt 28 zu gestalten. Neben dem Formabschnitt 28 befindet sich in einem Abstand zu diesem ein Lagerungsabschnitt 31 mit der runden Öffnung 25. Im montierten Zustand eines Befestigungsteiles 24 ist der Lagerungsabschnitt 31 und damit auch die Öffnung 25 außerhalb des Kalters 20 angeordnet. Zwischen dem Formabschnitt 28 und dem Lagerungsabschnitt 31 ist ein Teil des Kalters 20 formschlüssig eingefügt. Die Öffnung 25 ist, wie bereits erwähnt, zur Aufnahme eines Drahtendes 42 des Bodenrostes 41 vorgesehen. Der Formabschnitt 28 weist im Beispiel eine T-förmige Nut 30 auf, die in montiertem Zustand des Befestigungsteiles 24 horizontal verläuft. Die bevorzugt T-förmige Nut 30 bildet einen Raum 29, der zur formschlüssigen Aufnahme eines in diesem Falle ebenfalls T-förmigen Gegenhalters 35 vorgesehen ist. Der Gegenhalter 35, gewöhnlich aus Stahl gefertigt, besitzt eine Gewindebohrung 36, die in montiertem Zustand des Befestigungsteiles 24 vertikal verläuft. In die Gewindebohrung 36 wird die von unten nach oben gerichtete, nicht ,näher dargestellte Befestigungsschraube 37 für eine Fahrrolle 16 eingeschraubt und damit die Fahrrolle 16, das Befestigungsteil 24 und der Halter 20 gegeneinander verspannt. In der Zeichnung ist der Gegenhalter 35 so dargestellt, wie er in das Befestigungsteil 24 eingeschoben wird. Ein Pfeil verdeutlicht die Einschubrichtung.

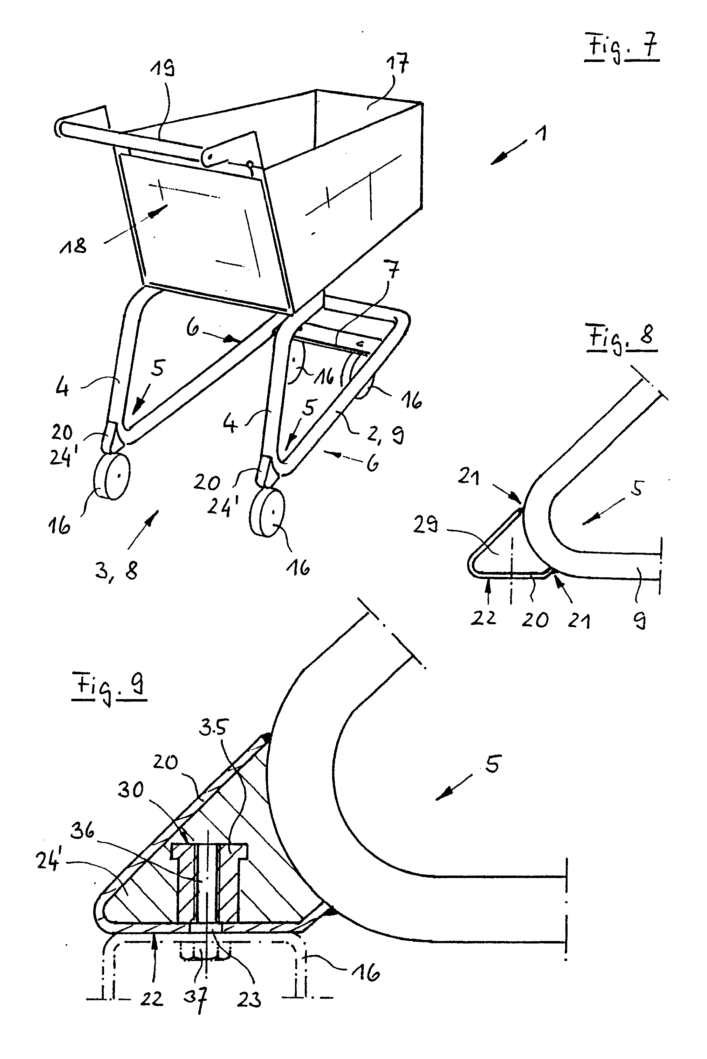

Im Detail zeigt Fig. 4 den vorderen rechten Eckbereich 12 des Fahrgestelles 2 von oben betrachtet. Man erkennt den Holm 13 des Fahrgestelles 2. An der Innenlängsseite 10 des Fahrgestelles 2 befindet sich ein Befestigungsteil 24, das in einen Halter 20 eingefügt ist. Die Deckplatte 27 überdeckt den Halter 20. Gestrichelt gezeichnet erkennt man die Umrisse des in diesem Falle V-förmigen Halters 20 ebenso, wie die Umrisse der Platte 22', an welcher eine nicht näher dargestellte Fahrrolle 16 mit ihrem Gabelrücken anliegt. Sichtbar ist ferner der Gegenhalter 35 mit der Gewindebohrung 36. Schließlich erkennt man auch eines der beiden Drahtenden 42 des Bodenrostes 41, das in der Öffnung 25 des Lagerungsabschnittes 31 um eine waagrechte Achse 26 verschwenkbar eingefügt ist. Der Formabschnitt 28 befindet sich innerhalb des Grundrisses des Halters 20.

Fig. 5 zeigt den vorderen Bereich 11 eines Fahrgestelles 2 mit einem aufgesetzten Abdeckteil 38. An das einstückige Abdeckteil 38 sind beidseitig je ein Befestigungsteil 24 angeformt, welche die gleiche Bauweise besitzen, wie die eingangs beschriebenen Befestigungsteile 24. Die Deckplatten 27 der Befestigungsteile 24 sind zu einem gemeinsamen Abdeckteil 38 weiterentwickelt. Die am Abdeckteil 38 angeformten Befestigungsteile 24 sind nach unten gerichtet und in die Halter 20 eingefügt. Das Abdeckteil 38 überdeckt einen Großteil des vorderen Bereiches 11 des Fahrgestelles 2, insbesondere dessen stirnseitiges Querstück 14 und den vorderen Innenbereich 15 des Fahrgestelles 2. Die vordere Querverbindung 39 des Abdeckteiles 38, die sich bevorzugt nur punktuell oder linienförmig am vorderen Querstück 14 abstützt, und deshalb federnde Eigenschaften besitzt, ist als im Querschnitt gerundeter Stoßfänger 40 ausgebildet, um Verletzungen des Fersenbereiches von Personen, die vor dem Einkaufswagen 1 gehen, zu vermeiden.

In einer Seitenansicht im Schnitt zeigt Fig. 6 den vorderen Bereich 11 des Fahrgestelles 2 mit aufgesetztem Abdeckteil 38 und montierter Fahrrolle 16. Bei Verwendung eines Abdeckteiles 38 ist es zweckmäßig, den vorderen Bereich 11 des Fahrgestelles 2 in Schieberichtung des Einkaufswagens 1 und damit auch das Abdeckteil 38 schräg abfallend anzuordnen. Dadurch wird das Ineinanderschieben solcher Einkaufswagen 1 erleichtert. Man erkennt in der Zeichnung, daß die vordere, als Stoßfänger 40 gestaltete Querverbindung 39 des Abdeckteiles 38 das Querstück 14 des Fahrgestelles 2 teilweise umgreift und abdeckt.

Der in Fig. 7 dargestellte Einkaufswagen 1 weist ebenfalls in üblicher Weise ein trapezförmiges Fahrgestell 2 auf, dessen längere parallele Seite fehlt. Am rückwärtigen Ende 3 des Fahrgestelles 2 streben Träger 4 nach oben, die einen Behälter in Form eines Korbes 17 tragen. Sowohl das Fahrgestell 2, als auch der Korb 17 verjüngen sich in Schieberichtung des Einkaufswagens 1, wobei die Rückwand 18 des Korbes 17 in bekannter Weise durch eine Klappe gebildet ist, die sich zum Zwecke des Ineinanderschiebens zweier Einkaufswagen 1 in das Korbinnere verschwenken läßt. Am oberen rückwärtigen Ende des Korbes 17 befindet sich eine Schiebeeinrichtung 19 in Form eines Handgriffes. Das Fahrgestell 2 weist vier Fahrrollen 16 auf. Die beiden vorderen Fahrrollen 16 sind an einer die Längsholme 6 des Fahrgestelles 2 verbindenden Querstrebe 7 befestigt. Das Ausführungsbeispiel beschränkt sich auf ein Fahrgestell 2, dessen Grundrahmen 9 lediglich aus einem Rohr gebildet ist und der an seinem hinteren offenen Ende 8, die Träger 4 bildend, beidseitig nach oben gekrümmt ist. Der Grundrahmen 9 kann noch weitere, aus Rohren bestehende Bauteile aufweisen. Auch die Querstrebe 7 kann zum Grundrahmen 9 gerechnet werden. Im Bereich der Trägerkrümmungen 5 sind Halter 20 vorgesehen, die je ein Befestigungsteil 24' zum Befestigen einer Fahrrolle 16 tragen.

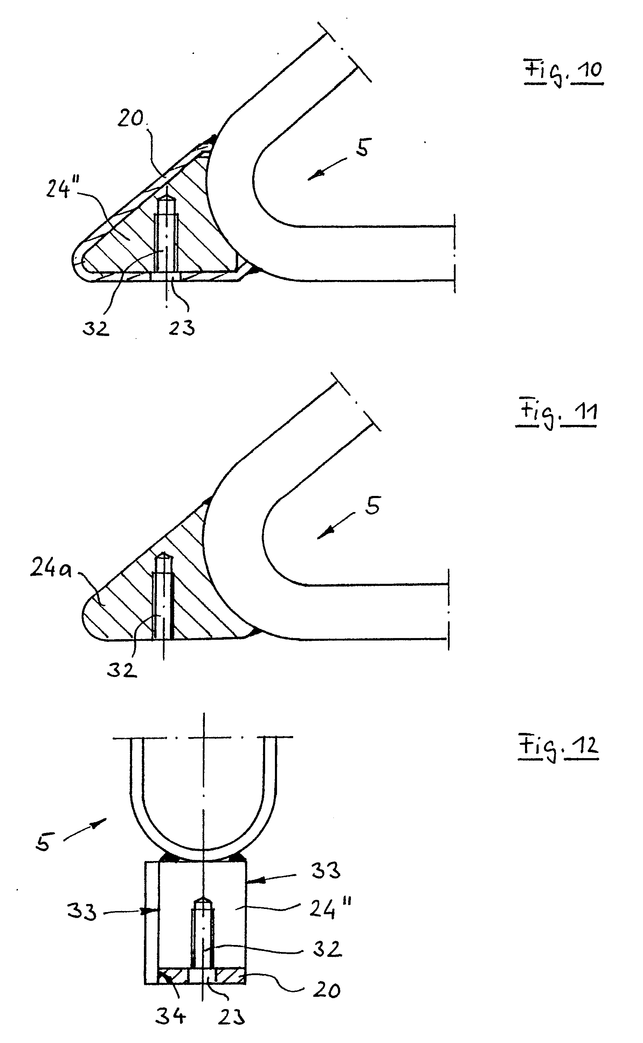

Fig. 8 zeigt eine Trägerkrümmung 5 mit einem Nalter 20. Der Halter 20 besteht aus einem Flachstahl, der flach liegend mit seinen Schenkelenden 21 am Grundrahmen 9 angeschweißt ist. Die Form des Halters 20 ist bevorzugt so gewählt, daß die nach unten weisende Anlagefläche 22 für eine Fahrrolle 16 waagrecht verläuft und daß das Befestigungsteil 24' zwischen dem Heiter 20 und dem Grundrahmen 9 angeordnet oder eingefügt ist.

In Anlehnung an Fig. 8 zeigt Fig. 9 im Schnitt eine Trägerkrümmung 5 mit Heiter 20, in den ein Befestigungsteil 24′ formschlüssig eingesetzt ist. An der nach unten weisenden Anlagefläche 22 des Halters 20 liegt eine Fahrrolle 16 an (strichpunktiert angedeutet). Das bevorzugt aus Kunststoff gefertigte Befestigungsteil 24′ weist einen quer zur Schieberichtung des Einkaufswagens 1 sich erstreckenden Raum 29 in Form einer waagrecht angeordneten Nut 30 mit beispielsweise T-förmigem Querschnitt auf, in welche ein Gegenhalter formschlüssig eingesetzt ist. Der Gegenhalter 35 wird zentrisch von einer senkrecht angeordneten Gewindebohrung 36 durchdrungen. Deckungsgleich mit der Gewindebohrung 36 ist im Heiter 20 ebenfalls eine Bohrung 23 vorgesehen, deren Durchmesser so gewählt ist, daß von unten her eine Befestigungsschraube 37 für eine Fahrrolle 16 durch den Heiter 20 hindurch zur Gewindebohrung 36 des Gegenhalters geführt werden kann. Auf diese Weise läßt sich beispielsweise eine als Lenkrolle gestaltete Fahrrolle 16 am Fahrgestell 2 sicher befestigen.

Die Lösung nach Fig. 10 verzichtet auf einen Gegenhalter 35. Das bevorzugt aus Metall gefertigte Befestigungsteil 24″ weist selbst eine zentrisch und senkrecht angeordnete Gewindebohrung 32 für die Aufnahme einer Befestigungsschraube 37 auf. Im Halter 20 ist wieder die Bohrung 23 vorgesehen.

Nach der Lösung gemäß Fig. 11 sind der Halter 20 und das Befestigungsteil 24 zu einem einzigen metallischen Befestigungsteil 24a vereinigt, das im Bereich der Trägerkrümmung an den Grundrahmen 9 angeschweißt ist. Zentrisch ist in diesem Befestigungsteil 24a wieder die senkrecht angeordnete Gewindebohrung 32 vorgesehen.

In einem Schnitt quer zur Schieberichtung des Einkaufswagens 1 zeigt Fig. 12 ein Befestigungsteil 24″, das an einer seiner beiden vertikalen Seitenflächen 33 eine Schulter 34 aufweist, mit der es sich seitlich am Halter 20 abstützt. Diese bevorzugte Ausführungsform eines Befestigungsteiles 24″ erlaubt dessen sichere Befestigung an einem Halter 20. Ein derart gestaltetes Befestigungsteil 24″ kann ebenfalls mit oder ohne Gegenhalter 35 (letzteres wie dargestellt) ausgestattet sein. Man erkennt in der Zeichnung wieder die Bohrung 23 des Halters 20 und die Gewindebohrung 32 des Befestigungsteiles 24″.

**Ansprüche**

1. Einkaufswagen (1) mit einem sich in Schieberichtung verjüngenden Fahrgestell (2), das einen Korb (17) trägt, der mit einer in das Korbinnere verschwenkbaren Rückwand (18) ausgestattet ist und das Fahrgestell (2) und der Korb (17) so gestaltet sind, daß sich gleiche Einkaufswagen (1) platzsparend ineinanderschieben lassen, wobei das Fahrgestell (2) einen die Fahrrollen (16) tragenden, aus rohrförmigem Material gebildeten Grundrahmen (9) aufweist, an dessen hinterem offenen Ende (8) zwei den Korb (17) tragende Träger (4) angeordnet sind, wobei die Träger (4) wahlweise auch durch Krümmung des hinteren Endes des Grundrahmens (9) nach oben gebildet sein können und wobei im vorderen Bereich (11) des Fahrgestelles (2) über den vorderen Fahrrollen (16) je ein Befestigungsteil (24) am Fahrgestell (2) angeordnet und jedes Befestigungsteil (24) zur schwenkbaren Aufnahme eines auf dem Fahrgestell (2) aufliegenden Bodenrostes (41) und zur Befestigung einer vorderen Fahrrolle (16) ausgebildet ist, dadurch gekennzeichnet, daß bei Verwendung von nach oben gekrümmten Trägern (4) im Bereich einer jeden Trägerkrümmung (5) je ein weiteres ausschließlich zur Befestigung einer hinteren Fahrrolle (16) bestimmtes Befestigungsteil (24′) vorgesehen sein kann und jedes Befestigungsteil (24, 24′) zwischen je einem ortsfest am Grundrahmen (9) angeordneten Halter (20) und dem Grundrahmen (9) einsetzbar ist und daß die Befestigungsteile (24, 24′) je einen Raum (29) zur formschlüssigen Aufnahme je eines lose einlegbaren Gegenhalters (35) aufweisen, der zum Befestigen je einer Fahrrolle (16) bestimmt ist.

2. Einkaufswagen nach Anspruch 1, dadurch gekennzeichnet, daß der Raum (29) durch eine Nut (30) mit beispielsweise T-förmigem Querschnitt gebildet ist.

3. Einkaufswagen nach Anspruch 1 oder 2, dadurch gekennzeichnet, daß jeder Gegenhalter (35) eine Gewindebohrung (36) zur Aufnahme einer zum Befestigen einer Fahrrolle (16) bestimmten Befestigungsschraube (37) aufweist.

4. Einkaufswagen nach einem der Ansprüche 1 bis 3, dadurch gekennzeichnet, daß an der Unterseite eines jeden Halters (20) eine Anlagefläche (22) oder eine Platte (22′) zum Abstützen einer Fahrrolle (16) vorgesehen und die Anlagefläche (22) oder die Platte (22′) mit einer senkrechten Bohrung (23) oder einem Durchbruch zum Hindurchführen einer Befestigungsschraube (37) ausgestattet ist.

5. Einkaufswagen nach einem der Ansprüche 1 bis 4, dadurch gekennzeichnet, daß jeder Halter (20) aus einem Flachstahl besteht, der mit seinen Schenkelenden (21) am Grundrahmen (9) angeschweißt ist.

6. Einkaufswagen nach einem der Ansprüche 1 bis 5, dadurch gekennzeichnet, daß die Halter (20) von oben betrachtet V-förmig gestaltet sind.

7. Einkaufswagen nach einem der Ansprüche 1 bis 6, dadurch gekennzeichnet, daß jedes Befestigungsteil (24) eine Deckplatte (27) aufweist, welche zum Abdecken eines Halters (20) bestimmt ist.

8. Einkaufswagen nach einem der Ansprüche 1 bis 7, dadurch gekennzeichnet, daß jedes Befestigungsteil (24) einen Formabschnitt (28) aufweist, welcher der Innenkontur der Halter (20) angepaßt ist.

9. Einkaufswagen nach einem der Ansprüche 1 bis 8, dadurch gekennzeichnet, daß der Raum (29) im Formabschnitt (28) vorgesehen ist.

10. Einkaufswagen nach einem der Ansprüche 1 bis 9, dadurch gekennzeichnet, daß anstelle von zwei Befestigungsteilen (24′) zwei Befestigungsteile (24″) vorgesehen sind, die anstelle je eines Gegenhalters (35) mit je einer Gewindebohrung (32) zum Befestigen je einer Fahrrolle (16) ausgestattet sind.

11. Einkaufswagen nach einem der Ansprüche 1 bis 10, dadurch gekennzeichnet, daß die Befestigungsteile (24″) an einer ihrer vertikalen Seitenflächen (33) eine zur seitlichen Anlage an einen Halter (20) bestimmte Schulter (34) aufweisen.

12. Einkaufswagen nach einem der Ansprüche 1 bis 11, dadurch gekennzeichnet, daß anstelle von Befestigungsteilen (24′ und 24″) zwei Befestigungsteile (24a) vorgesehen sind, die, ausgestattet mit je einer zum Befestigen einer Fahrrolle (16) bestimmten Gewindebohrung (32), im Bereich der Trägarkrümmung (5) am Grundrahmen (9) angeschweißt sind.

13. Einkaufswagen nach einem der Ansprüche 1 bis 12, dadurch gekennzeichnet, daß die Befestigungsteile (24) Bestandteil eines Abdeckteiles (38) sind, das den vorderen Bereich (11) des Fahrgestelles (2) überdeckt, wobei die vordere Querverbindung (39) des Abdeckteiles (38) als Stoßfänger ausgebildet ist.

14. Einkaufswagen nach einem der Ansprüche 1 bis 13, dadurch gekennzeichnet, daß die vordere Querverbindung (39) des Abdeckteiles (38) lediglich punktuell oder linienförmig am Querstück (14) des Fahrgestelles (2) aufliegt.

15. Einkaufswagen nach einem der Ansprüche 1 bis 14, dadurch gekennzeichnet, daß die vordere Querverbindung (39) federnde Eigenschaften besitzt.

16. Einkaufswagen nach einem der Ansprüche 1 bis 15, dadurch gekennzeichnet, daß das Abdeckteil (38) in Schieberichtung fallend am Fahrgestell (2) befestigt ist.

17. Einkaufswagen nach einem der Ansprüche 1 bis 16, dadurch gekennzeichnet, daß die Querverbindung (39) das Querstück (14) des Fahrgestelles (2) teilweise umgreift.

Fig. 1

Fig. 2

Fig. 3

Fig. 4

Fig. 5

Fig. 6

Fig. 7

Fig. 8

Fig. 9

Fig. 10

Fig. 11

Fig. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 488 561   (ATELIERS REUNIES)<br>* Seite 2, Zeile 26 - Seite 6, Zeile 10; Figuren 1-6 *<br>– – – | 1 | B 62 B 3/10 |
| A | US-A-3 909 034   (TRUBIANO)<br>* Spalte 1, Zeile 64 - Spalte 3, Zeile 42; Figuren 1-4 *<br>– – – | 1 | |
| A | FR-A-2 191 630   (ATELIERS REUNIS)<br>* Seite 2, Zeile 12 - Seite 4, Zeile 27; Figuren 1-4 *<br>– – – – – | 1 | |

| RECHERCHIERTE SACHGEBIETE (Int. Cl.5) |
|---|
| B 62 B |

Der vorliegende Recherchenbericht wurde für alle Patentansprüche erstellt

| Recherchenort | Abschlußdatum der Recherche | Prüfer |
|---|---|---|
| Den Haag | 06 Dezember 90 | VANNESTE M.A.R. |